# FASCICULE DE BREVET EUROPEEN

(11) **EP 1 251 967 B1**
(45) Date de publication et mention de la délivrance du brevet: **18.10.2006**
(21) Numéro de dépôt: 01905859.3
(22) Date de dépôt: 29.01.2001
(51) Int. Cl.: B05B 13/04, B25J 9/02, B25J 9/04

(54) **DISPOSITIF DE PULVERISATION DESTINE NOTAMMENT A UNE CABINE DE PEINTURE DE CARROSSERIE AUTOMOBILE**
VORRICHTUNG ZUM SPRITZEN, INSBESONDERE FÜR EINE SPRITZKABINE EINER KRAFTFAHRZEUGKAROSSERIE
SPRAYER DEVICE IN PARTICULAR FOR A MOTOR VEHICLE BODY PAINT SPRAY BOOTH

(30) Priorité: 31.01.2000 FR 0001200
(43) Date de publication de la demande: 30.10.2002
(73) Titulaire: Eisenmann France SARL, F-78400 Chatou (FR)
(72) Inventeur: FOUVET, Michel, F-38800 Champagnier (FR); RODRIGUES, José, F-38650 Saint-Guillaume (FR)
(74) Mandataire: Bratel, Gérard
(86) Numéro de dépôt international: PCT/FR2001/000273
(87) Numéro de publication internationale: WO 2001/056705

(56) Documents cités:
- EP-A- 0 341 134
- DE-A- 2 228 598
- DE-U- 29 504 954
- FR-A- 1 307 444
- US-A- 4 367 532
- US-A- 4 611 695

## Description

La présente invention concerne un dispositif de pulvérisation destiné notamment à une cabine de peinture pour carrosseries automobiles.

Pour peindre des carrosseries de véhicules automobiles, un produit de revêtement est projeté sous forme liquide ou pulvérulente sur cette carrosserie. Pour éviter des projections de produit de revêtement en dehors de la zone de peinture, la carrosserie est amenée dans une cabine en forme de tunnel équipée d'un sas et ventilée de haut en bas. A l'intérieur de cette cabine, se trouvent des pulvérisateurs qui envoient un produit de revêtement, notamment de la peinture, sur la carrosserie à peindre.

Afin de perturber le moins possible l'atmosphère à l'intérieur de la cabine et pour éviter des salissures diverses engendrant des défauts en forme de grains sur les parties peintes, il est connu de placer à l'extérieur de la cabine les éléments moteurs nécessaires à la projection de revêtement sur la carrosserie pour essayer de ne laisser à l'intérieur de la cabine que les pulvérisateurs. Ainsi, le document FR-2 710 858 décrit une machine d'application de peinture comportant un système de rideaux croisés permettant de placer à l'intérieur de la cabine uniquement le pulvérisateur et le bras le supportant, tandis que les autres parties mécaniques sont placées à l'extérieur de la cabine. Ceci permet de limiter les opérations de nettoyage au pulvérisateur et à son bras support, ainsi qu'aux parois, relativement lisses, de la cabine et des rideaux croisés.

L'inconvénient d'une telle machine est toutefois son encombrement à la fois longitudinal, c'est-à-dire dans l'axe du convoyeur sur lequel se déplace la carrosserie, mais également son encombrement transversal. En effet, de manière classique, une cabine d'application de peinture comporte trois machines latérales de chaque côté du convoyeur ainsi qu'une machine destinée à la pulvérisation de produit de revêtement sur les parties supérieures de la carrosserie. Afin de pouvoir réaliser des gains de temps de cycle pour réaliser la peinture d'une carrosserie et de pouvoir peindre à distance constante les parties de la carrosserie situées transversalement à l'axe du convoyeur telles que les avants et les arrières, les machines présentent un degré de liberté, généralement appelé suivi, parallèlement à l'axe du convoyeur. Pour des machines latérales, le "suivi" est en général d'environ 600 à 800 mm. Ces machines présentent donc dans le sens de l'axe du convoyeur une longueur relativement importante.

De plus, il est nécessaire de laisser un intervalle suffisant entre deux machines afin d'éviter que les pulvérisateurs ne se peignent entre eux. Une distance généralement constatée entre deux pulvérisateurs est de 1100 mm. Il est également nécessaire aux opérateurs responsables de la cabine de peinture de pouvoir contrôler visuellement l'application de la peinture sur la carrosserie. Pour cela, un espace vitré suffisant doit être prévu entre deux machines voisines.

Toutes ces contraintes font que les cabines présentent une longueur par rapport à l'axe du convoyeur relativement importante. De même, la constitution des machines de l'art antérieur implique la nécessité d'avoir un axe de pénétration transversal à l'axe du convoyeur muni d'une course suffisante afin de pouvoir suivre le galbe des carrosseries et aussi pouvoir s'adapter à des carrosseries de largeurs différentes. La machine présente ainsi une course transversale qui nécessite d'augmenter la profondeur du bâti des machines. On obtient ainsi une partie mécanique à l'extérieur de la cabine d'une largeur relativement importante.

Globalement, les cabines de peinture et les machines associées présentent une longueur et une largeur par rapport à l'axe du convoyeur relativement importantes. Dans le but d'une diminution des coûts d'exploitation notamment les coûts liés au flux d'air et aux frais de nettoyage, il est important de diminuer à la fois la longueur et la largeur des équipements se trouvant le long d'une ligne de convoyage dans un atelier. En effet, chaque mètre carré d'atelier constitue un investissement important et un coût d'exploitation annuel qui se répercutent bien entendu sur le prix du produit fini.

Le document FR-2 777 483 propose des aménagements permettant de réduire le nombre de pulvérisateur d'une station complète de pulvérisation de produit de revêtement en proposant un procédé de projection de produit de revêtement qui permet, dans la pratique, de n'avoir que deux machines d'application latérale au lieu des trois machines habituellement constatées. En effet, les cadences de production étant amenées à varier rapidement en fonction de la demande, l'adaptation se fait par une augmentation du nombre de pulvérisateurs d'une manière linéaire à la production:
- 3 jusqu'à 2 m/min,
- 7 de 2 à 3,5 m/min,
- 9 au delà.

Toutefois, cette solution conduit à inclure des suivis sur les machines latérales ce qui au total ne permet pas de réduire la largeur de la station complète d'application.

Un autre inconvénient des machines d'application décrites ci-dessus est leur manque de flexibilité. Les constructeurs automobiles souhaitent de plus en plus avoir la possibilité de fabriquer n'importe quel modèle de leur gamme sur une chaîne de montage donnée. De même, lorsqu'un nouveau modèle apparaît dont le style peut conduire à des zones à peindre plus difficilement atteignables, le constructeur souhaite pouvoir conserver ses installations de peinture utilisées pour les modèles plus anciens. Or, dans le cas des machines classiques telles que décrites ci-dessus, les points accessibles par la cinématique de la machine restent limités et la garantie de peindre les nouveaux véhicules sans retouche ne peut être assurée.

De même, les vitesses de convoyeur entraînant les carrosseries sont en constante augmentation afin de rentabiliser l'outil de production et diminuer ainsi le prix de revient final du produit fabriqué. Cette augmentation de la vitesse des convoyeurs nécessite, dans l'état actuel de la technique, d'augmenter les longueurs de suivi des machines d'application de revêtement de protection. Pour augmenter ce suivi dans les machines de l'art antérieur, il faut alors augmenter la longueur selon l'axe du convoyeur des stations d'application ce qui est contraire au souci d'économie énoncé plus haut.

Une installation telle que décrite ci-dessus comporte bien évidemment de nombreux organes de pilotages et de mesures qui sont en général regroupés dans une série d'armoires électro-pneumatiques située autour de la cabine de pulvérisation. Ces organes peuvent également être placés dans un boîtier fixé au dos de chaque machine comme le divulgue le brevet EP-B1- 0618013. Dans les deux cas, cela conduit à une occupation de place au sol supplémentaire et donc à des investissements plus coûteux.

Pour réaliser la projection d'un produit de revêtement sur une carrosserie automobile ou similaire, il est également connu d'utiliser des robots. Le brevet US-4,984,745 révèle un tel robot qui comporte une base fixe sur laquelle est montée pivotante, autour d'un axe vertical, une base tournante. Cette dernière porte un bras articulé muni à son extrémité libre d'un poignet portant un pulvérisateur. Une réalisation analogue est divulguée par le document US 4,367,532.

Un tel robot permet un suivi d'une carrosserie sur un convoyeur plus important que les machines décrites précédemment.

Toutefois, un tel robot présente de nombreux inconvénients. En effet, le robot est placé dans sa quasi totalité dans la cabine de peinture. On rencontre alors les problèmes de dépôt sur tout le robot, non seulement le bras supportant le pulvérisateur mais aussi la base fixe et la base mobile. Ceci pose des problèmes quant au nettoyage de l'installation qui nécessite un temps relativement important et génère des défauts sur les carrosseries sous forme de grain.

Un autre inconvénient de ces robots est qu'ils sont placés au bord du convoyeur et que leur encombrement en largeur, c'est-à-dire transversalement à l'axe du convoyeur, est relativement important. Cet encombrement est d'environ 20% plus important que celui des machines décrites plus haut d'où un coût d'exploitation énergétique et écologique de la cabine plus élevé.

Un autre type connu de robot de peinture, du genre potence, décrit dans le document FR-1307444, combine des mouvements de translation et de rotation pour assurer le suivi du profil transversal d'une carrosserie. Ce dispositif n'est pas conçu pour assurer un mouvement de suivi accompagnant l'avance des carrosseries sur le convoyeur.

La présente invention a alors pour but de fournir un dispositif d'application de produit de revêtement permettant de réaliser une station d'application présentant une surface au sol réduite. De préférence, ce dispositif disposera d'une grande longueur de suivi, d'une forte flexibilité et comprendra des machines placées pour l'essentiel à l'extérieur de la cabine d'application.

A cet effet, elle propose un dispositif de pulvérisation d'un produit de recouvrement, destiné notamment à une cabine de peinture pour carrosseries automobiles, comportant un bras mobile permettant d'assurer un mouvement de suivi de l'objet à recouvrir se déplaçant dans un plan horizontal sur un convoyeur ou similaire, et à l'extrémité libre duquel est placé un pulvérisateur.

L'idée à la base de l'invention est de monter le bras mobile autour d'un premier axe sur une base formant une plaque tournante disposée dans un plan sensiblement vertical, ledit premier axe étant situé dans un plan parallèle à ladite plaque, la base étant montée pivotante autour d'un axe sensiblement horizontal et sensiblement perpendiculaire à l'axe de convoyage, et ladite base étant guidée pour effectuer un mouvement de translation sensiblement perpendiculaire à son axe de pivotement. Ainsi, pour pouvoir assurer le mouvement de suivi, parallèlement à l'axe de convoyage, un autre degré de liberté est fourni. Selon la forme de réalisation, ce degré de liberté est donné par une translation guidée de la base le long d'un axe sensiblement vertical ou le long d'un axe sensiblement horizontal.

Dans une forme de réalisation, le bras mobile est un bras articulé en deux parties présentant une articulation réalisant un coude, une première partie du bras étant articulée à la base, celle-ci étant montée pivotante autour d'un axe sensiblement horizontal et sensiblement perpendiculaire à l'axe de convoyage.

Dans le cas où le dispositif comporte un bras articulé, la base est également montée mobile en translation dans une direction verticale ou horizontale. Le dispositif présente alors un degré de liberté supplémentaire. Cette configuration permet simplement d'augmenter encore la flexibilité de la machine en lui permettant d'atteindre des points plus éloignés

De préférence, un poignet est monté entre l'extrémité libre du bras et le pulvérisateur. Dans ce cas, le poignet présente par exemple deux degrés de liberté et peut tourner d'une part autour d'un axe longitudinal par rapport au bras ou à la partie de bras qui le porte et d'autre part autour d'un axe incliné autour de cet axe longitudinal. Par exemple l'angle d'inclinaison de cet axe est de l'ordre de 45°.

Pour un dispositif selon l'invention comportant un bras articulé présentant un coude, l'axe du coude est avantageusement parallèle à l'axe de pivotement de la première partie du bras sur la base.

La présente invention concerne également une installation pour la pulvérisation de pièces, notamment de carrosseries automobiles, qui comporte au moins un dispositif de pulvérisation tel que décrit précédemment.

Une telle installation comporte par exemple, de chaque côté d'un convoyeur, deux dispositifs de pulvérisation tels que décrits ci-dessus à cinq degrés de liberté et un dispositif de pulvérisation selon l'invention et comportant six degrés de liberté.

Pour limiter les salissures, ce qui permet d'éviter les défauts sous forme de grains sur les carrosseries peintes, et de réduire au minimum les temps de nettoyage, l'installation comporte avantageusement une paroi de cabine passant sensiblement au niveau de la face de la base portant le bras articulé ou non d'un dispositif selon l'invention, l'axe de pivotement du bras sur la base étant placé par rapport à la paroi de cabine à l'intérieur de l'installation, c'est-à-dire du côté du convoyeur.

Enfin, il est possible de prévoir dans une telle machine un emplacement permettant l'implantation des organes de pilotage et de mesure. Cet emplacement peut être directement incorporé dans le bâti de la machine sans augmenter sensiblement son volume. On obtient ainsi une machine disposant d'un suivi bien supérieur à celui des machines de l'art antérieur et incorporant sa propre armoire électrique de pilotage dans un volume équivalent à celui des machines de l'art antérieur.

De toute façon, l'invention sera bien comprise à l'aide de la description qui suit, en référence au dessin schématique annexé, représentant à titre d'exemples non limitatifs deux formes de réalisation d'un dispositif de pulvérisation selon l'invention.
Figure 1 est un schéma de principe montrant les différents degrés de liberté d'une première machine selon l'invention,
Figure 2 est un schéma de principe montrant les différents degrés de liberté d'une seconde machine selon l'invention,
Figure 3 est une vue en perspective d'une machine construite sur le principale de la figure 1,
Figure 4 est une vue de dessus de la machine de la figure 3,
Figure 5 est une vue en élévation de la machine représentée sur les figures 3 et 4, et
Figure 6 est une vue en perspective d'une machine construite selon le principe de la figure 2.

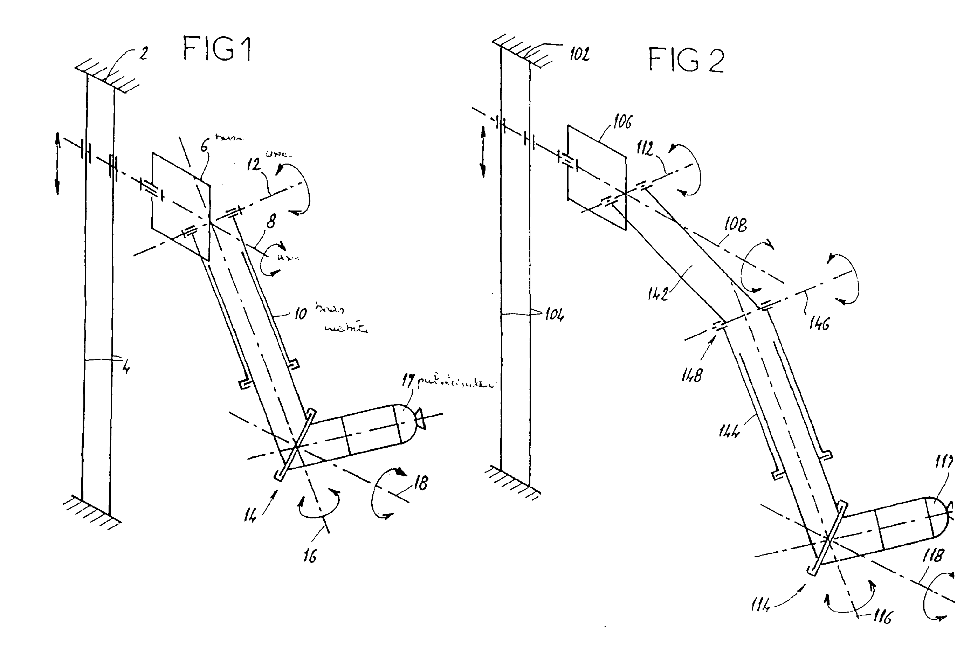

Un bâti 2 de machine s'étendant sensiblement verticalement est schématisé sur la figure 1. Des rails de guidage verticaux 4 permettent le déplacement en translation vertical d'un chariot portant une base 6. Cette dernière est montée pivotante autour d'un axe 8 horizontal. Un bras 10 est monté pivotant autour d'un axe 12 sur la base 6. L'axe 12 est disposé dans un plan perpendiculaire à l'axe 8. L'extrémité libre du bras 10 est équipée d'un poignet 14 portant un pulvérisateur 17. Le poignet 14 présente deux degrés de liberté. Tout d'abord, il est monté pivotant autour de l'axe longitudinal 16 du bras 10. Ensuite, il possède un degré de liberté par rotation autour d'un axe 18 incliné de 45° par rapport à l'axe 16.

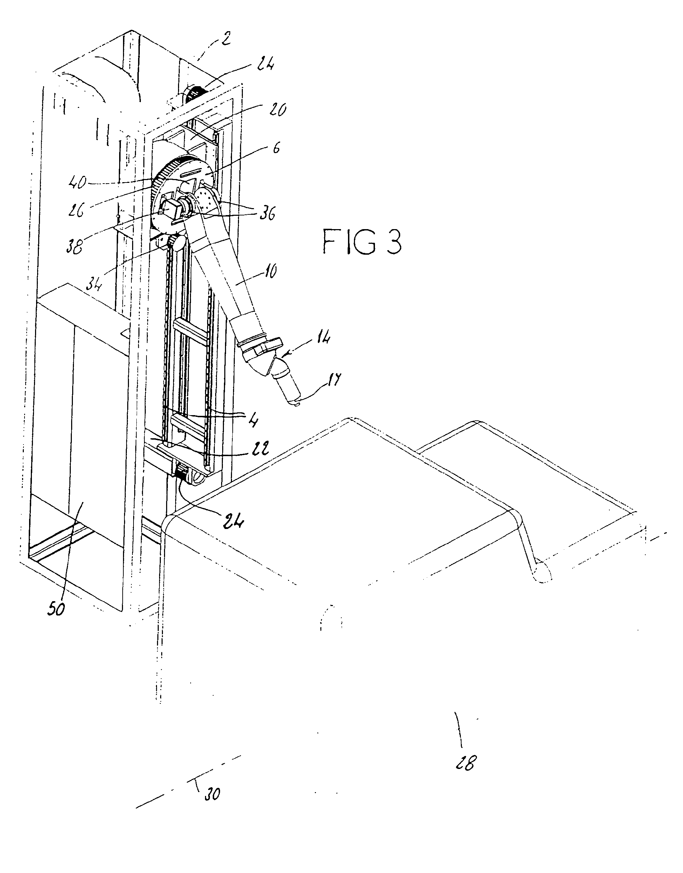

La figure 3 montre une machine réalisée sur le principe de la figure 1. On reconnaît sur cette figure le bâti 2 portant les deux rails de guidage verticaux 4. Un chariot 20 est monté coulissant sur les deux rails de guidage. L'entraînement de ce chariot est réalisé à l'aide d'un servomoteur électrique 22. Sur l'arbre de sortie de ce moteur électrique, est montée une roue dentée 24 destinée à recevoir une poulie dentée non représentée au dessin. Le servomoteur est monté juste en dessous des rails de guidage 4. En haut de ces rails de guidage, est disposée une seconde roue dentée 24, sensiblement identique à la première, et recevant également la courroie crantée. Le chariot 20 est fixé sur la courroie crantée. Le mouvement du chariot 20 est donc commandé par le servomoteur 22. Des capteurs de fin de course peuvent bien entendu être également prévus pour commander l'arrêt du moteur 22.

Sur la figure 3, outre le bâti 2 et la machine correspondante, est représentée schématiquement une carrosserie automobile 28. Cette carrosserie est placée sur un convoyeur permettant le déplacement de la carrosserie le long d'un axe horizontal 30. Le bâti 2 est disposé au bord du convoyeur, à distance de la carrosserie 28. Les deux rails de guidage 4 sont parallèles et définissent un plan qui est perpendiculaire à l'axe de convoyage 30.

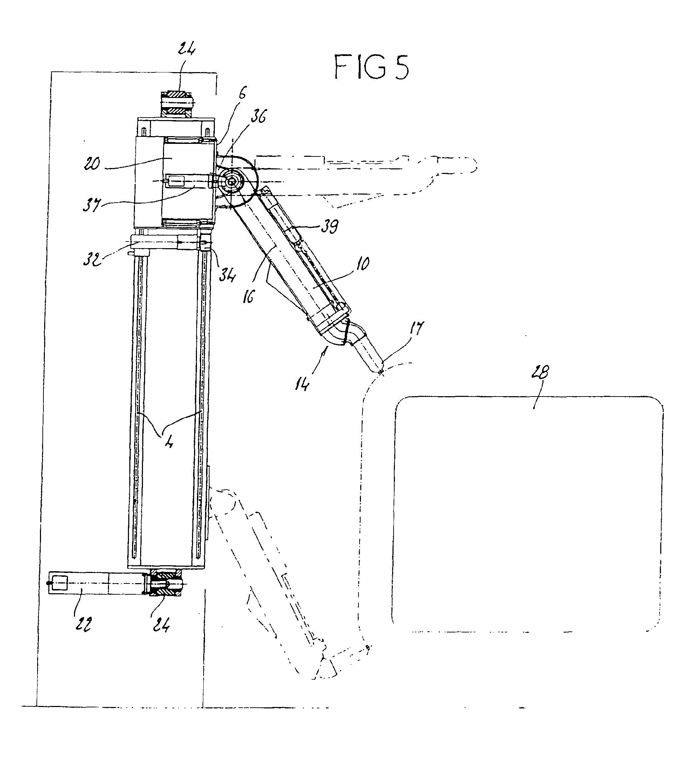

La base 6 se présente sous la forme d'un disque pourvu à sa périphérie d'une denture 26. Le disque 6 est disposé dans un plan vertical parallèle à l'axe de convoyage 30. L'axe 8 autour duquel peut pivoter la base 6 correspond à l'axe de révolution de ce disque. Cet axe est horizontal et perpendiculaire à l'axe de convoyage 30. La rotation de la base 6 est assurée grâce à un servomoteur 32 (figure 5) d'axe parallèle à l'axe 8. A l'extrémité de l'arbre de sortie de ce servomoteur 32 est montée une roue dentée 34 dont la denture correspond à la denture 26 de la base 6.

La base 6 porte du côté du convoyeur des paliers 36 définissant l'axe 12 de pivotement du bras 10. Cet axe 12 se trouve dans un plan parallèle au plan contenant la base 6, c'est-à-dire dans un plan vertical parallèle à l'axe de convoyage 30. Le pivotement du bras 10 est commandé par un troisième servomoteur placé à l'intérieur du chariot 20 et porté par la base 6. Le mouvement du moteur est transmis au bras 10 par un dispositif de renvoi 38.

Les moyens moteurs permettant le mouvement du poignet autour de l'axe longitudinal 16 du bras 10 comportent un servomoteur électrique 39 placé sous un capot à l'extérieur du bras 10. Un système à roue dentée et couronne dentée permet la rotation du poignet autour de l'axe 16. Quant aux moyens moteurs pour le mouvement de rotation autour de l'axe 18 incliné (à 45°) par rapport à l'axe longitudinal 16, ils sont disposés à l'intérieur du bras 10 et ne sont pas représentés au dessin. On retrouve là aussi un servomoteur entraînant directement ou par l'intermédiaire d'un dispositif de renvoi le mouvement correspondant. L'alimentation de ces moyens moteurs se fait par l'intérieur du bras 10. Une ouverture 40 est prévue dans la base 6 pour permettre le passage des conduites nécessaires à l'alimentation et à la commande de ces moyens moteurs. Cette ouverture 40 permet également l'alimentation en produit de recouvrement du pulvérisateur 17.

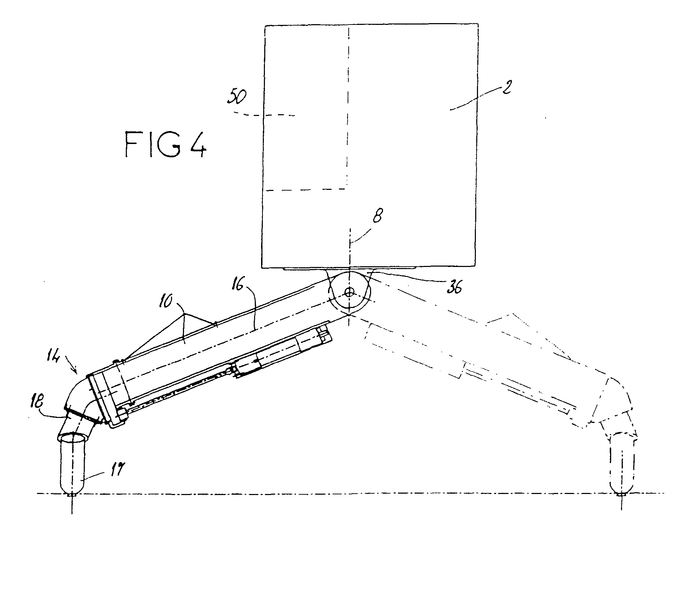

Comme on peut le constater sur la figure 3, la place prise par le chariot 20, les rails de guidage 4 et autres éléments mécaniques dans le bâti 2 est relativement restreinte. On prévoit alors de disposer dans ce bâti 2 une armoire électrique 50 regroupant les organes de commande électriques et/ou pneumatiques ainsi que d'éventuels organes de mesure. Cette armoire 50 peut être disposée comme représenté sur les figures 3 et 4 sur la face opposée à la face du bâti 2 portant les rails de guidage 4. Elle pourrait aussi se trouver sur la face arrière du bâti, du côté opposé au bras 20.

La figure 4 montre en vue de dessus deux positions de pulvérisation de la machine représentée sur la figure 3 dans le sens de l'axe de convoyage 30. Entre les deux positions extrêmes représentées, l'une en traits forts et l'autre en traits mixtes, on a une distance correspondant sensiblement à deux fois la longueur du bras 10. En prévoyant un bras 10 d'une longueur d'environ un mètre, on a donc pour ce dispositif de pulvérisation une possibilité de suivi de la carrosserie automobile 28 de l'ordre de deux mètres. Cette distance de suivi est très nettement supérieure à la distance de suivi des machines de l'art antérieur. Grâce au mouvement de monte et baisse le long des rails de guidage 4 et de la possibilité de pivotement de la base 6, toutes les positions intermédiaires entre les deux positions extrêmes représentées sur la figure 4 peuvent être prises par le pulvérisateur. Les deux axes du poignet permettent d'avoir un pulvérisateur toujours sensiblement perpendiculaire à la surface de la carrosserie à recouvrir. Le pulvérisateur 17 est destiné ici à pulvériser un produit de recouvrement sur des surfaces sensiblement verticales de la carrosserie automobile 28.

On remarque que, bien que permettant un suivi de la carrosserie sur une longueur d'environ deux mètres, le bâti 2 peut présenter une largeur bien inférieure à cette distance de suivi. De cette manière, il est possible, entre deux machines voisines, de prévoir une grande surface vitrée permettant de contrôler le travail de la machine.

En ce qui concerne la protection vis-à-vis des projections de produit de recouvrement de la machine, on peut remarquer qu'il est possible de faire passer ici une cloison de cabine sensiblement au niveau de la base 6 de la machine. L'axe de pivotement du bras 10 se trouve alors au plus près de la paroi de la cabine, du côté intérieur de celle-ci. Pour protéger toute la partie mécanique se trouvant à l'intérieur du bâti 2, on peut utiliser un système de rideaux tel que par exemple révélé dans le document FR-2 710 858. Ici, il n'est pas nécessaire d'avoir des rideaux croisés mais uniquement une paire de rideaux pour suivre le mouvement de translation verticale du chariot 20.

La figure 5 montre à titre d'exemple quelques positions que peuvent prendre le bras 10 et le pulvérisateur 17 par rapport à une carrosserie automobile dans le but de peindre cette dernière. De même que la figure 4 montre la grande flexibilité de la machine représentée dans le sens longitudinal de l'axe de convoyage 30, la figure 5 montre la grande flexibilité de cette machine dans une direction verticale.

La figure 2 montre le principe d'une seconde machine selon l'invention. On retrouve ici un bâti 102 dans lequel sont disposés deux rails de guidage verticaux 104. Un chariot 120 coulisse le long des rails de guidage 104. Ce chariot a donc un mouvement de translation vertical. Il porte une base 106 montée pivotante par rapport à un axe 108 horizontal. La base 106 porte un bras articulé. Ici, ce bras est constitué d'un bras 142 et d'un avant-bras 144. Le bras 142 est monté pivotant sur la base 106 autour d'un axe 112. Ce dernier est disposé dans un plan vertical perpendiculaire à l'axe 108. L'extrémité du bras 142 opposée à la base 106 porte l'avant-bras 144. Cet avant-bras 144 et ce bras 142 sont articulés autour d'un axe 146 parallèle à l'axe 112. Un coude 148 est ainsi réalisé.

L'avant-bras 144 est comparable au bras 10 décrit précédemment en référence à la figure 1. Il porte à son extrémité un poignet 114 possédant deux degrés de liberté. Ce poignet peut tourner autour de l'axe longitudinal 116 de l'avant-bras 144 et autour d'un axe 118 disposé selon un angle par rapport à l'axe longitudinal 116 par exemple 45°. Ce poignet 114 porte un pulvérisateur 117 à son extrémité libre.

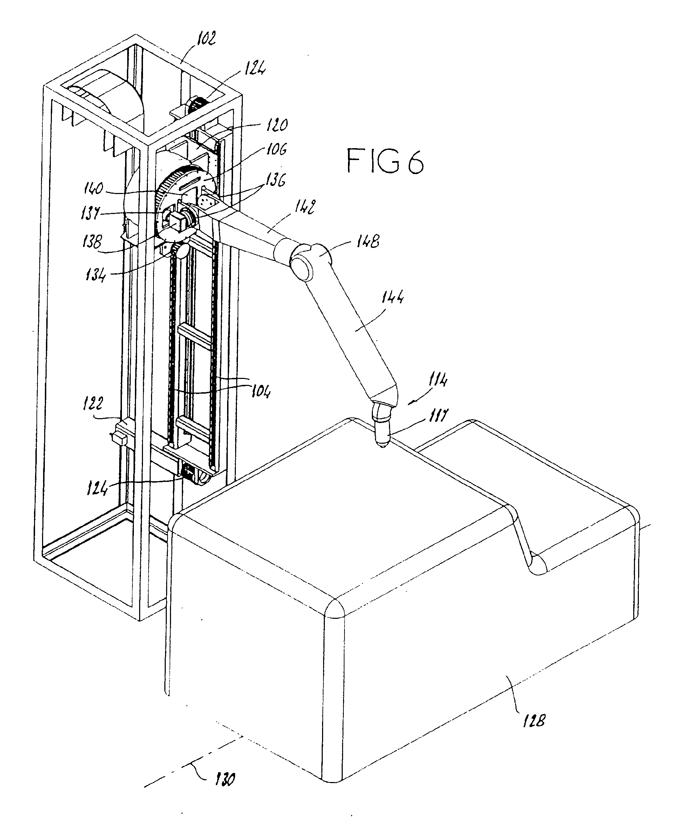

Cette seconde forme de réalisation présente donc un axe d'articulation supplémentaire par rapport à la forme de réalisation selon le principe décrit en référence à la figure 1. Comme l'illustre la figure 6, cette forme de réalisation permet d'envisager le recouvrement de zones plus étendues d'une carrosserie automobile 128 se déplaçant sur un convoyeur d'axe 130.

Dans la machine représentée sur la figure 6, on retrouve un bâti 102, un chariot 120 et des moyens d'entraînement mécanique semblables à ceux décrits en référence à la figure 3. Les mêmes références que dans les figures 3 à 5 sont reprises ici mais augmentées du nombre 100. On retrouve ainsi un servomoteur 122 entraînant des roues dentées 124 pour l'entraînement du chariot 120 par l'intermédiaire d'une courroie crantée non représentée au dessin. De même, la base 106 est en forme de disque présentant une denture périphérique 126. Un servomoteur non représenté permet par l'intermédiaire d'une roue dentée 134 de commander le pivotement de la base 106. On retrouve également des paliers 136 pour porter le bras 142. De même que pour le bras 10 des figures 3 à 5, l'entraînement du bras 142 est réalisé à l'aide d'un servomoteur 137 et d'un dispositif de renvoi 138. Les moyens moteurs permettant les divers mouvements du poignet 114 sont semblables aux moyens moteurs permettant d'agir sur le poignet 14 des figures 3 et 5. Ces moyens ne sont pas représentés sur la figure 6. En ce qui concerne le mouvement au niveau du coude 148, un servomoteur, non représenté au dessin, est intégré dans le bras 142. Les conduites nécessaires pour la commande et l'alimentation en énergie des moyens moteurs se trouvant au niveau du bras 142 et de l'avant-bras 144 s'effectuent par une ouverture 140 réalisée dans la base 106. Cette ouverture 140 permet également l'alimentation en produit de recouvrement du pulvérisateur 117.

Dans cette forme de réalisation, la machine est également disposée le long d'un convoyeur de telle manière que l'axe 108 soit horizontal et sensiblement perpendiculaire à l'axe de convoyage 130. On retrouve ainsi une disposition relative entre le bâti 102 et le convoyeur identique à celle décrite plus haut entre le bâti 2 et le convoyeur correspondant.

Grâce au degré de liberté supplémentaire réalisé ici, cette machine présente une flexibilité plus importante que celle représentée sur les figures 3 à 5. Cette plus grande flexibilité lui permet d'être utilisée pour peindre des zones plus étendues de la carrosserie 128.

Pour réaliser une station de peinture de carrosserie automobile, on peut par exemple envisager de disposer de part et d'autre d'un convoyeur à chaque fois trois machines de pulvérisation telles que représentées sur les figures 3 à 5. On a ainsi six machines de pulvérisation : quatre machines pourront être qualifiées de machines latérales et seront destinées à pulvériser un produit de recouvrement sur des parois sensiblement verticales tandis que les deux autres machines servent à pulvériser un produit de recouvrement sur des surfaces sensiblement horizontales.

Dans des cas plus complexes, il est aussi possible d'utiliser quatre machines telles que celle représentée sur les figures 3 à 5 et deux machines telles que celle représentée sur la figure 6. Dans ce cas, les quatre premières machines cinq axes pourront être qualifiées de machines latérales et les deux autres machines six axes serviront à pulvériser sur les surfaces sensiblement horizontales.

Enfin, il est bien entendu possible de n'utiliser que des machines six axes ce qui permet de donner encore plus de flexibilité à la station d'application.

Dans tous les cas, une telle station de peinture a un encombrement réduit, tant dans le sens longitudinal par rapport au convoyeur que dans le sens transversal. Le fait de n'avoir que six machines permet de réduire la longueur dans le sens longitudinal. Dans le sens transversal, grâce à la conception de ces machines pour lesquelles il est inutile de prévoir-un mouvement de translation transversal par rapport au convoyeur, il est possible de gagner environ 20% de largeur par rapport aux stations de peinture actuellement connues. C'est dans le sens transversal que le gain d'espace, par rapport aux stations connues de l'art antérieur, est le plus important.

Un autre avantage important par rapport aux stations "compactes" de l'art antérieur est la possibilité de prévoir de très grandes surfaces vitrées permettant de contrôler le déroulement des opérations à l'intérieur de la cabine. En effet, comme il a déjà été remarqué plus haut, les bâtis des machines décrites sont très peu larges. Ceci permet la mise en place de surfaces vitrées entre deux machines voisines très importantes.

Comme il va de soi, l'invention ne se limite pas aux deux formes de réalisation préférentielles décrites ci-dessus à titre d'exemples non limitatifs ; elle en embrasse au contraire toutes les variantes de réalisation dans le cadre des revendications ci-après.

Ainsi, il est possible d'envisager une variante de réalisation de la machine représentée à la figure 6 dans laquelle la base portant le bras et le bras articulé ne pourrait pas se déplacer verticalement. Une telle forme de réalisation permet d'obtenir des performances sensiblement équivalentes aux performances obtenues avec une machine telle que représentée sur les figures 3 à 5. Dans ce cas, le mouvement de suivi est essentiellement assuré grâce au pivotement au niveau du coude et à la rotation de la base portant le bras.

De même, il est possible d'envisager que la machine cinq axes ou six axes puisse être montée non pas verticalement mais horizontalement : dans ce cas l'axe de déplacement selon les rails de guidage 4 deviendrait le suivi et le réglage en hauteur serait réalisé par la rotation autour de l'axe 12 pour la machine cinq axes et les rotations autour des axes 112 et 146 pour la machine six axes. Ainsi on pourrait utiliser deux machines l'une au dessus de l'autre par côté.

## Revendications

1. Dispositif de pulvérisation d'un produit de recouvrement destiné notamment à une cabine de peinture pour carrosseries automobiles (28), comportant un bras mobile (10 ; 142, 144) permettant d'assurer un mouvement de suivi, parallèlement à l'axe de convoyage (30 ; 130), de l'objet à recouvrir se déplaçant dans un plan horizontal sur un convoyeur ou similaire, et à l'extrémité libre duquel est placé un pulvérisateur (17 ; 117), **caractérisé en ce que** le bras mobile (10 ; 142, 144) est monté pivotant autour d'un premier axe (12 ; 112) sur une base (6 ; 106) formant une plaque tournante disposée dans un plan sensiblement vertical, ledit premier axe (12 ; 112) étant situé dans un plan parallèle à ladite plaque (6 ; 106), la base (6 ; 106) étant montée pivotante autour d'un axe (8 ; 108) sensiblement horizontal et sensiblement perpendiculaire à l'axe de convoyage (30), et ladite base (6 ; 106) étant guidée pour effectuer un mouvement de translation sensiblement perpendiculaire à son axe de pivotement (8 ; 108).

2. Dispositif selon la revendication 1, **caractérisé en ce que** la base (6 ; 106) est animée d'un mouvement qui est la combinaison de la rotation autour de l'axe (8 ; 108) horizontal et d'une translation guidée (4 ; 104) le long d'un axe sensiblement vertical.

3. Dispositif selon la revendication 1, **caractérisé en ce que** la base (6 ; 106) est animée d'un mouvement qui est la combinaison de la rotation autour de l'axe (8 ; 108) horizontal et d'une translation guidée le long d'un axe sensiblement horizontal.

4. Dispositif selon l'une quelconque des revendications 1 à 3, **caractérisé en ce que** le bras mobile est un bras articulé en deux parties (142, 144), présentant une articulation (146) réalisant un coude (148), une première partie (142) du bras étant articulée à la base (106).

5. Dispositif selon l'une quelconque des revendications 1 à 4, **caractérisé en ce qu'**un poignet (14 ; 114) est monté entre l'extrémité libre du bras (10 ; 144) et le pulvérisateur (17 ; 117).

6. Dispositif selon la revendication 5, **caractérisé en ce que** le poignet (14 : 114) présente deux degrés de liberté et peut tourner d'une part autour d'un axe longitudinal (16 ; 116) par rapport au bras (10) ou à la partie de bras (144) qui le porte et d'autre part autour d'un axe (18 ; 118) incliné autour de cet axe longitudinal (16 ; 116).

7. Dispositif selon la revendication 6, **caractérisé en ce que** l'angle d'inclinaison de l'axe (18 : 118) autour de l'axe longitudinal (16 : 116) est sensiblement de 45°.

8. Dispositif selon la revendication 4, **caractérisé en ce que** l'axe (146) du coude (148) est parallèle à l'axe (112) de pivotement de la première partie du bras (142) sur la base (106).

9. Dispositif de pulvérisation dans lequel une partie des organes mécaniques est logée dans un bâti (2 ; 102), selon l'une des revendications 1 à 8, **caractérisé en ce qu'**il comporte une armoire (50) regroupant des organes de commande électriques et/ou pneumatiques intégrée dans le bâti (2 ; 102) protégeant une partie des organes mécaniques.

10. Installation (28) pour la pulvérisation de pièces, notamment de carrosseries automobiles, **caractérisée en ce qu'**elle comporte au moins un dispositif de pulvérisation selon l'une des revendications 1 à 9.

11. Installation selon la revendication 10, **caractérisée en ce qu'**elle comporte une paroi de cabine passant sensiblement au niveau de la face de la base (6 ; 106) portant le bras articulé (142, 144) ou non (10) d'un dispositif selon l'une des revendications 1 à 9, l'axe (12 ; 112) de pivotement du bras (10 ; 142, 144) sur la base (6 ; 106) étant placé par rapport à la paroi de cabine à l'intérieur de l'installation, c'est-à-dire du côté du convoyeur.

12. Installation selon la revendication 11, **caractérisée en ce qu'**elle comporte une paroi de cabine passant sensiblement au niveau de la face de la base (6 ; 106) portant le bras-articulé (142, 144) ou non (10) d'un dispositif selon l'une des revendications 1 à 6, l'axe (12 ; 112) de pivotement du bras sur la base étant placé par rapport à la paroi de cabine à l'intérieur de l'installation, c'est-à-dire du côté du convoyeur.

## Claims

1. A device for spraying a coating product intended in particular for a paint booth for spraying car bodyworks (28), comprising a moving arm (10; 142, 144) able to perform a tracking movement parallel to the axis of conveying (30;130) of the object that is to be coated, which is moving in a horizontal plane along a conveyor or the like, and at the free end of which a sprayer (17;117) is placed, **characterized in that** the moving arm (10; 142, 144) is mounted to pivot about a first axis (12;112) on a base (6;106) forming a rotating plate lying in a roughly vertical plane, said first axis (12; 112) lying in a plane parallel to said plate (6;106), the base (6;106) being mounted to pivot about an axis (8; 108) that is roughly horizontal and roughly perpendicular to the axis of conveying (30), said base (6;106) being guided for performing a movement of translation which is roughly perpendicular to its axis of pivoting (8;108).

2. The device as claimed in claim 1, **characterized in that** the base (6;106) is given a movement which is the combination of the rotation about the horizontal axis (8;108) and of a guided translation (4;104) along a roughly vertical axis.

3. The device as claimed in claim 1, **characterized in that** the base (6;106) is given a movement which is the combination of the rotation about the horizontal axis (8;108) and of a guided translation along a roughly horizontal axis.

4. The device as claimed in any of claims 1 to 3, **characterized in that** the moving arm is an articulated arm consisting of two parts (142,144) having an articulation (146) forming an elbow (148), a first part (142) of the arm being articulated on the base (106).

5. The device as claimed in any one of claims 1 to 4, **characterized in that** a wrist (14; 114) is mounted between the free end of the arm (10; 144) and the sprayer (17; 117).

6. The device as claimed in claim 5, **characterized in that** the wrist (14; 114) has two degrees of freedom and can rotate, on the one hand, about a longitudinal axis (16; 116) with respect to the arm (10) or with respect to that part of the arm (144) which carries it and, on the other hand, about an axis (18; 118) which is inclined about this longitudinal axis (16;116).

7. The device as claimed in claim 6, **characterized in that** the angle of inclination of the axes (18;118) about the longitudinal axis (16;116) is at approximately 45°.

8. The device as claimed in claim 4, **characterized in that** the axis (146) of the elbow (148) is parallel to the axis (112) of pivoting of the first part of the arm (142) on the base (106).

9. A spraying device in which some of the mechanical members are housed in a structure (2;102), as claimed in one of claims 1 to 8, **characterized in that** it comprises a cabinet (50) grouping together the electrical and/or pneumatic control members and which is built into the structure (2;102) protecting some of the mechanical members.

10. An installation (28) for spraying parts, particularly car bodyworks, **characterized in that** it comprises at least one spraying device as claimed in one of claims 1 to 9.

11. The installation as claimed in claim 10, **characterized in that** it comprises a wall running more or less level with the face of the base (6; 106) carrying the articulated arm (142, 144) or unarticulated arm (10) of a device as claimed in one of claims 1 to 9, the axis (12; 112) of pivoting of the arm on the base (6;106) being placed with respect to the wall inside the installation, that is to say on the conveyor side.

## Patentansprüche

1. Spritzvorrichtung zum Aufbringen eines Überzugs, die insbesondere für eine Lackicrkabine für Fahrzeugkarosserien (28) bestimmt ist und einen beweglichen Arm (10; 142, 144) umfasst, der eine Folgebewegung parallel zur Transportachse (30; 130) des zu überziehenden Objekts gewährleistet, das sich auf horizontaler Ebene auf einer Transporteinrichtung oder dergleichen bewegt, und an dessen freiem Ende eine Spritzdüse (17; 117) angeordnet ist, **dadurch gekennzeichnet, dass** der bewegliche Arm (10; 142, 144) um eine erste Achse (12; 112) schwenkbar auf einer Basis (6; 106) montiert ist, die eine drehbare Platte bildet, die auf einer im wesentlichen vertikalen Ebene angeordnet ist, wobei diese erste Achse (12; 112) auf einer zu dieser Platte (6; 106) parallel verlaufenden Ebene liegt, und wobei die Basis (6; 106) um eine im wesentlichen horizontale Achse (8; 108) schwenkbar und im wesentlichen senkrecht zur Transportachse (30) montiert ist, und wobei diese Basis (6; 106) so geführt wird, dass eine Translationsbewegung bewirkt wirkt, die im wesentlichen senkrecht zu der Schwenkachse (8; 108) verläuft.

2. Vorrichtung nach Anspruch 1, **dadurch gekennzeichnet, dass** die Basis (6; 106) durch eine Bewegung geführt wird, die die Kombination der Drehbewegung um die horizontale Achse (8; 108) und einer Translationsbewegung (4; 104) ist, die entlang einer im wesentlichen vertikalen Achse geführt wird.

3. Vorrichtung nach Anspruch 1, **dadurch gekennzeichnet, dass** die Basis (6; 106) durch eine Bewegung geführt wird, die die Kombination der Drehbewegung um die horizontale Achse (8; 108) und einer Translationsbewegung ist, die entlang einer im wesentlichen horizontalen Achse geführt wird.

4. Vorrichtung nach einem der Ansprüche 1 bis 3, **dadurch gekennzeichnet, dass** der bewegliche Arm ein Arm ist, der in zwei Teile (142, 144) gegliedert ist, wobei er eine Gelenkverbindung (146) aufweist, die einen Knick (148) bildet, wobei ein erster Teil (142) des Arms an der Basis (106) mit Gelenkverbindung befestigt ist.

5. Vorrichtung nach einem der Ansprüche 1 bis 4, **dadurch gekennzeichnet, dass** ein Gelenkstück (14; 114) zwischen dem freien Ende des Arms (10; 144) und der Spritzdüse (17; 117) montiert ist.

6. Vorrichtung nach Anspruch 5, **dadurch gekennzeichnet, dass** das Gelenkstück (14; 114) zwei Freiheitsgrade hat und einerseits um eine Längsachse (16; 116) bezogen auf den Arm (10) oder auf den Armteil (144), der sie trägt, drehen kann, und andererseits um eine Achse (18; 118) drehen kann, die gegen diese Längsachse (16; 116) geneigt ist.

7. Vorrichtung nach Anspruch 6, **dadurch gekennzeichnet, dass** der Neigungswinkel der Achse (18; 118) zur Längsachse (16; 116) im wesentlichen 45° beträgt.

8. Vorrichtung nach Anspruch 4, **dadurch gekennzeichnet, dass** die Achse (146) des Knicks (148) parallel ist zur Schwenkachse (112) des ersten Teils des Arms (142) an der Basis (106).

9. Spritzvorrichtung, bei der ein Teil der mechanischen Einrichtungen, nach einem der Ansprüche 1 bis 8, in einem Rahmen (2; 102) untergebracht ist, **dadurch gekennzeichnet, dass** er einen Schrank (50) umfasst, der elektrische und/oder pneumatische Steuerorgane aufnimmt und in dem Rahmen (2; 102) integriert ist, der einen Teil der mechanischen Einrichtungen schützt.

10. Anlage (28) zum Spritzen von Teilen, insbesondere von Fahrzeugkarosserien, **dadurch gekennzeichnet, dass** sie mindestens eine Spritzvorrichtung nach einem der Ansprüche 1 bis 9 umfasst.

11. Anlage nach Anspruch 10, **dadurch gekennzeichnet, dass** sie eine Kabinenwand hat, die im wesentlichen im Bereich der Vorderseite der Basis (6; 106) verläuft, die den gegliederten (142, 144) oder nicht gegliederten (10) Arm einer Vorrichtung entsprechend einem der Ansprüche 1 bis 9 trägt, wobei die Schwenkachse (12; 112) des Arms (10; 14a, 144) auf der Basis (6; 106) in Bezug auf die Kabinenwand im Inneren der Anlage angeordnet ist, das heißt, auf der Seite der Transporteinrichtung.
